# EUROPÄISCHE PATENTSCHRIFT

(11) **EP 1 375 455 B1**
(45) Veröffentlichungstag und Bekanntmachung des Hinweises auf die Patenterteilung: **05.10.2005**
(21) Anmeldenummer: 03007659.0
(22) Anmeldetag: 03.04.2003
(51) Int. Cl.: C04B 38/10, C04B 28/02

(54) **Baustoffmischung mit Schaumstoffteilchen**
Building material mixture comprising expanded particles
Mélange de matériau de construction contenant des particules expansées

(30) Priorität: 21.06.2002 DE 10227629
(43) Veröffentlichungstag der Anmeldung: 02.01.2004
(73) Patentinhaber: Hafner Beton GmbH & Co KG, 83052 Bruckmühl (DE)
(72) Erfinder: Bausch, Siegbert, 83045 Bruckmühl (DE)
(74) Vertreter: Berngruber, Otto

(56) Entgegenhaltungen:
- CH-A- 514 513
- DE-A- 19 831 295
- DE-U- 20 017 460
- DE-U- 29 616 057
- FR-A- 2 631 331
- GB-A- 1 399 424
- GB-A- 1 535 132
- US-A- 4 040 855
- US-A- 5 641 815

## Beschreibung

Die Erfindung bezieht sich auf eine Baustoffmischung aus einer Kunststoffschaumstoffteilchen, Zement und Wasser enthaltenden Mischung. Sie hat auch ein Verfahren zur Herstellung und Verarbeitung sowie die Verwendung des Baustoffs zum Gegenstand.

Als Ausgleichsschüttungen beispielsweise in Fehlböden werden z.B. Blähtone und Perlite, Porenleichtbeton sowie eine Mischung aus Polystyrolteilchen, Zement und Wasser verwendet, die als "Thermozell" bezeichnet wird. Zwar kann im Gegensatz zu Blähbeton und Perliten der Porenleichtbeton oder die Mischung mit den Polystyrolteilchen mit einer Estrichpumpe in den Fehlboden gepumpt werden. Abgesehen davon, dass er sehr langsam austrocknet, weist Porenleichtbeton jedoch eine relativ hohe Dichte auf. Dem gegenüber hat die besagte Mischung mit den Polystyrolteilchen den Nachteil, dass sie an der Baustelle zubereitet werden muss. Dabei erweist sich nicht nur die Handhabung der leichten Polystyrolteilchen als schwierig, vielmehr treten auch erhebliche Gewichtsungenauigkeiten auf, die zu einer mangelnden Reproduzierbarkeit der Druckfestigkeit, Rohdichte und dergleichen Eckdaten führen.

Aus EP1157978A1 geht ein Baustoff aus Zement, Natursand, Polystyrol-Chips, Wasser, einem Plastizitätszusatz sowie synthetischem Fasermaterial hervor. Das Verhältnis des Zements zu den Polystyrol-Chips liegt zwischen 0,4 und 0,8 kg/Ltr. Aus DE 198 22 352 A1 geht ein Leichtbeton aus Zement, Natursand, Polystyrol, Wasser sowie Stabilisator und Fließmittel hervor. Das Verhältnis des Zements zu dem Polystyrol beträgt 0,5 kg/Ltr. Als Stabilisator wird ein Material mit elektrostatischer Aufladung verwendet, beispielsweise Elektrofilterasche aus Heizkraftwerken. Die Rohdichte dieses bekannten Leichtbetons ist mit 650 kg/m³ noch recht hoch und seine Wärmeleitfähigkeit von 0,179 W/mK lässt noch zu wünschen übrig.

Aufgabe der Erfindung ist es, eine Baustoffmischung bereit zu stellen, die eine wesentlich niedrigere Rohdichte und Wärmeleitfähigkeit besitzt.

Dies wird erfindungsgemäß mit der im Anspruch 1 gekennzeichneten Baustoffmischung erreicht. In den Ansprüchen 2 bis 6 sind bevorzugte Ausgestaltungen der Erfindung wiedergegeben. Der Anspruch 7 hat ein bevorzugtes Verfahren zur Herstellung der erfindungsgemäßen Baustoffmischung zum Gegenstand, und in den Ansprüchen 8 und 9 sind bevorzugte Verwendungen des erfindungsgemäßen Baustoffs angegeben.

Zur Herstellung des erfindungsgemäßen Baustoffs werden
180 bis 220 kg, insbesondere etwa 200 kg Zement,
110 bis 150 kg, insbesondere etwa 130 kg Kesselsand,
80 bis 100 kg Wasser, und
1000 Ltr. Kunststoffschaumstoffteilchen sowie ein Schaumbildner miteinander vermischt.

Das angegebene Volumen der Kunststoffschaumstoffteilchen stellt dabei deren Schüttvolumen dar.

Als Zement hat sich insbesondere ein Zement der DIN-Norm I 42,5 R als geeignet erwiesen, der auch als Portlandzement PZ 45 F bezeichnet wird. Bei der erfindungsgemäß verwendeten geringen Wassermenge zeichnet sich dieser Zement durch eine schnelle Festigkeitsentwicklung aus. Eine mit dem erfindungsgemäßen Baustoff hergestellte Ausgleichsschicht ist dadurch schnell begehbar, so dass z.B. die Estrichschicht kurz danach aufgebracht und damit die Bauzeit entsprechend verkürzt werden kann. Zudem führt der Zement mit der DIN-Norm I 42,5 R zu einer hohen Druckfestigkeit.

Der Kesselsand stellt das Stützkorn in dem erfindungsgemäßen Baustoff dar. Kesselsand fällt als Abfallprodukt bei der Flugaschegewinnung an. Insbesondere wird Kesselsand mit der Handelsbezeichnung "Rocalith" eingesetzt. Der Kesselsand zeichnet sich durch seine geringe Dichte von weniger als 2,0 kg/dm³ aus. Die Korngröße des Kesselsandes beträgt vorzugsweise höchstens 5 mm, insbesondere höchstens 3 mm.

Als Kunststoffschaumstoffteilchen werden insbesondere Teilchen von Kunststoffschaumstoffen mit geschlossenen Poren verwendet, vorzugsweise Polystyrol. Die Teilchengröße der KunststoffSchaumstoffteilchen beträgt vorzugsweise 1 bis 20 mm, insbesondere 4 bis 10 mm. Als Polystyrolteilchen werden insbesondere geschredderte Styroporteilchen verwendet, die im Handel beispielsweise in 100 Ltr.-Säcke verpackt angeboten werden. Die Styroporteilchen stellen Kugeln und Agglomerate von Kugeln dar.

Die erfindungsgemäße Schaumstoffmischung enthält ferner einen Schaumbildner und gegebenenfalls ein Fliessmittel. Der Schaumbildner bewirkt eine Lufteinführung in den Baustoff und damit eine zusätzliche Herabsetzung der Rohdichte.

Der Schaumbildner ist ein Tensid. Er bewirkt damit auch eine Herabsetzung der Grenzflächenspannung zwischen den Kunststoffschaumteilchen und der wässrigen Zement/Sand-Mischung. Damit wird die Einarbeitung der Kunststoffschaumstoffteilchen in die Mischung erleichtert. Als Schaumbildner können anionische oder kationische Tenside eingesetzt werden. Die Tenside bestehen im allgemeinen aus einem Kohlenwasserstoffrest mit 8 bis 20 Kohlenstoffatomen und einer sauren Gruppe (anionische Tenside) oder einer basischen Gruppe (kationische Tenside), die in Salzform vorliegen. Die anionischen Tenside können beispielsweise eine Carboxylat- (-COO⁻) oder Sulfonat-Gruppe (-SO₃⁻) aufweisen, die beispielsweise als Natriumsalz vorliegen, während die kationischen Tenside beispielsweise eine Amin-, Imin- oder quaternäre Ammoniumgruppe als basische Gruppe besitzen können. Als Schaummittel hat sich beispielsweise Natriumlaurylsulfonat als geeignet erwiesen, insbesondere im Gemisch mit Sulfosuccinaten und Fett-, beispielsweise Kokosfett-Alkyldimethylaminoxid. Die Menge des Schaumbildners beträgt mindestens 1 g, vorzugsweise 10 bis 1000 g, bezogen auf einen m³ der Mischung aus Zement, Kesselsand, Wasser und Kunststoffschaumstoffteilchen.

Vorzugsweise wird als Schaumbildner ein Schaumbildner mit der Handelsbezeichnung "80/23 Schaumpromotor" der Isola GmbH verwendet und zwar in einer Menge von 170 bis 250 g, vorzugsweise etwa 200 g, bezogen auf einen m³ der vorstehend angegebenen Mischung. Der Schaumbildner wird vorzugsweise als wässrige Lösung zugegeben.

Durch das Fliessmittel wird die Pump- und Fliessfähigkeit des erfindungsgemäßen Baustoffs verbessert. Vorzugsweise wird ein Fliessmittel auf Polycarboxylat-Basis verwendet, insbesondere ein Fliessmittel mit der Handelsbezeichnung "FM 10" der Isola GmbH, und zwar in einer Menge von 1 - 2,5 Ltr., insbesondere etwa 2 Ltr., bezogen auf einen m³ der vorstehend angegebenen Mischung.

Der erfindungsgemäße Baustoff zeichnet sich durch eine Trockenrohdichte von weniger als 0,4 kg/dm³ und eine mittlere Druckfestigkeit von mindestens 0,5 N/mm² aus. Zudem beträgt die Wärmeleitfähigkeit λ _{10/tr} und λ _{10(23/80)} jeweils höchstens 0,09 W/m*K. Darüber hinaus besitzt er ein hohes Wassereindringvermögen von mindestens 300 l/m² x min (im Mittel). Der erfindungsgemäße Baustoff fällt außerdem in die Brandschutzklasse B 1, ist also schwer entflammbar.

Zur Herstellung des erfindungsgemäßen Baustoffes werden vorzugsweise die Schaumstoffteilchen im Transportbetonwerk in einen leeren Fahrmischer gegeben. Gleichzeitig wird der Zement, der Sand, das Wasser und der Schaumbildner im Transportbetonwerk mit einem Zwangsmischer gemischt. Diese Mischung aus Zement, Sand, Wasser und Schaumbildner wird dann zu den Schaumstoffteilchen in dem Fahrmischer gegeben. Der Fahrmischer fährt anschließend mit drehender Trommel zur Baustelle. Um die homogene Mischung aus Zement, Sand, Wasser und Schaumstoffteilchen und Schaumbildner auch hinreichend fließfähig zu machen, wird an der Baustelle das Fließmittel zugegeben und mit dem Gemisch im Fahrmischer etwa fünf bis fünfzehn Minuten gemischt. Danach kann der Baustoff aus dem Fahrmischer mit einer Pumpe, beispielsweise einer Beton- oder Estrichpumpe auf die jeweilige Fläche aufgetragen werden, um dann dort abzubinden und auszuhärten.

Bei einem Kunststoffschaumstoff-Anteil von 1000 Ltr. beträgt bei einem Zementanteil von 180 - 220 kg das Verhältnis Zement zu Kunststoffschaumstoffteilchen erfindungsgemäß lediglich 0,18 - 0,22 kg/Ltr. Darauf ist die außerordentlich niedrige Trockenrohdichte und extrem geringe Wärmeleitfähigkeit des erfindungsgemäßen Baustoffs zurückzuführen. Der Grund für den im Vergleich zum Zement erfindungsgemäß hohen Anteil der Kunststoffschaumstoffteilchen liegt in erster Linie in dem erfindungsgemäßen Herstellungsverfahren, der Verwendung des Schaumbildners und in der Verwendung von Kesselsand als Stützkorn begründet. So werden erfindungsgemäß die Bestandteile nicht einzeln zusammengegeben und dann gemischt, sondern es wird erst getrennt eine Mischung aus Zement, Kesselsand, Wasser und Schaumbildner in einem Zwangsmischer hergestellt, die dann in einem Fahrmischer mit den Kunststoffschaumstoffteilchen vermischt wird, wobei die Kunststoffschaumstoffteilchen erst in den Fahrmischer gegeben werden und dann die im Zwangsmischer hergestellte Mischung aus Zement, Kesselsand, Wasser und Schaumbildner zu den Kunststoffschaumstoffteilchen in dem Fahrmischer gegeben wird. Dadurch lassen sich die leichten Kunststoffschaumstoffteilchen in großer Menge homogen in der Baustoffmischung verteilen. Der Schaumbildner, der oberflächenaktive Eigenschaften besitzt, ermöglicht zudem, dass sich die große Menge der Kunststoffschaumstoffteilchen in die Mischung einarbeiten lässt, die Kunststoffschaumstoffteilchen also nicht aufschwimmen. Durch die geringe Dichte des Kesselsandes wird dieser Effekt verstärkt. Zugleich wird durch den Kesselsand verhindert, dass bei der Förderung zu hohe Pressdrücke und damit Förderschwierigkeiten auftreten.

Der erfindungsgemäße Baustoff wird vorzugsweise als Ausgleichsschüttung unter Estrich oder einer sonstigen Lastverteilungsplatte verwendet. Der Estrich bzw. die Lastverteilungsplatte nimmt neben der Flächen- auch die Punktlast auf. Demgegenüber zeichnet sich der erfindungsgemäße Baustoff auf Grund seiner hohen Druckfestigkeit vor allem durch sein hohes Flächenlastaufnahmevermögen aus.

Durch seine geringe Rohdichte und seine hohe Druckfestigkeit verträgt sich der erfindungsgemäße Baustoff auch mit der Statik von Altbauten. D.h., er ist insbesondere zur Altbausanierung geeignet. Dabei kann er vor allem als Ausgleichschüttung in Fehlböden eingesetzt werden.

Um ihn in der vorgesehen Dicke zu verteilen, können Schaufeln oder eine Abziehlatte verwendet werden, insbesondere, wenn der Wasseranteil, bezogen auf einen m³ Baustoff, weniger als 90 kg beträgt. Insbesondere wenn der Wasseranteil 90 kg oder mehr, bezogen auf einen m³ Baustoff, beträgt, kann eine tixotrophe Mischung vorliegen, die durch Rakeln in die gewünschte Position fließt.

Wie erwähnt, besitzt der erfindungsgemäße Baustoff zudem ein außerordentlich hohes Wassereindringvermögen. Er kann daher auch als Drainschicht verwendet werden. Insbesondere können aus dem erfindungsgemäßen Baustoff auch Platten hergestellt werden, die dann beispielsweise als Drainplatten eingesetzt werden können.

Da die Schicht bzw. die Platten aus dem erfindungsgemäßen Baustoff auch frostbeständig sind, kann er z.B. auch im Garten- und Landschaftsbau für den Unterbau eingesetzt werden, beispielsweise zur Terrassierung.

Nachstehend sind zwei Anwendungsbeispiele des erfindungsgemäßen Baustoffs anhand der Zeichnung näher erläutert. Darin zeigen:
Figur 1 einen Schnitt durch einen Fehlboden mit einer Ausgleichsschicht aus dem erfindungsgemäßen Baustoff;
Figur 2 einen Schnitt durch einen weiteren Boden mit dem erfindungsgemäßen Baustoff als Ausgleichsschüttung.

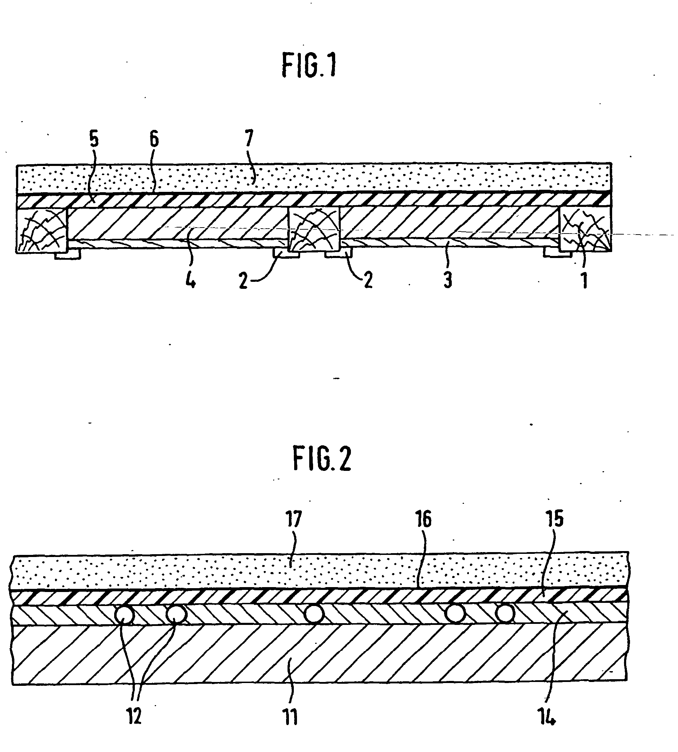

Gemäß Figur 1 weist ein Fehlboden Balken 1, eine mit Knacken 2 befestigte Bretterlage 3 an der Unterseite, eine Ausgleichsschüttung 4 zwischen dem Balken 1 und eine Drittschalldämmung 5, eine Kunststofffolie 6 sowie einen Estrichbelag 7 auf der Ausgleichsschüttung 4 auf.

Dem gegenüber sind nach Figur 2 auf einem Rohboden 11 verlegte Rohre 12 und dergleichen Leitungen in die Ausgleichsschüttung 14 eingebettet, auf der die Drittschalldämmung 15, die Kunststofffolie 16 und der Estrichbelag 17 aufgebracht sind.

Das nachstehende Beispiel dient der weiteren Erläuterung der Erfindung.

### Beispiel

Zur Herstellung von 1 m³ des erfindungsgemäßen Baustoffes werden in einem Zwangsmischer vermischt
200 kg Zement (CEM I 42,5 R)
130 kg Kesselsand (Rocalith), Korngröße ≤ 3 mm
90 kg Wasser
200 g Schaumbildner (Schaumpromotor 80/23 der Isola GmbH eine wässrige Lösung von Natriumlaurylsulfat, Sulfosuccinaten und Kokosfett-Alkyldimethylaminoxid).

Dieses Gemisch wird in einen Fahrmischer gegeben, der vorher mit 1000 Ltr. geschredderten Styroporteilchen mit einer Teilchengröße von 5 bis 10 mm gefüllt worden ist. Die Trommel des Fahrmischers wird etwa 30 Minuten lang langsam gedreht (mittlere Fahrzeit), um das Styropor mit dem Gemisch aus Zement, Sand, Wasser und Schaumbildner zu vermischen. Dann werden 2 Ltr. des Fließmittels FM 10 der Isola GmbH dem Gemisch zugegeben und etwa 10 Minuten weitergemischt.

Die fließfähige Mischung wird in einer Dicke von etwa 10 cm verteilt. Der Baustoff weist nach dem Aushärten folgende Eigenschaften auf:

| | | |
|---|---|---|
| Frischrohdichte | 0,37 | kg/dm³ |
| Trockenrohdichte | 0,31 | kg/dm³ |
| Mittlere Druckfestigkeit | 0,60 | N/mm² |
| Wärmeleitfähigkeit λ _{10/tr} | 0,972 | W/m^{*}K |
| Wärmeleitfähigkeit λ _{10(23/80)} | 0,078 | W/m^{*}K |
| Bezugfeuchtegehalt | 3,89 | % (bei 23°C und 80% rel. Feuchte) |
| Wassereindringvermögen | 339 | 1/m² x min (im Mittel) |

## Patentansprüche

1. Baustoffmischung aus einer
Zement, Sand, Wasser, Kunststoffschaumstoffteilchen und wenigstens ein Additiv enthaltenden Mischung,
**dadurch gekennzeichnet,**
**dass** die Mischung als Additiv einen Schaumbildner enthält, der Sand durch Kesselsand gebildet wird und folgende Gewichts- und Volumenanteile vorliegen:
180 - 220 kg Zement,
110 - 150 kg Kesselsand,
80 - 100 kg Wasser und
1000 Ltr. Kunststoffschaumstoffteilchen.

2. Baustoffmischung nach Anspruch 1, **dadurch gekennzeichnet, dass** der Zement ein Zement der DIN-Norm I 42,5 R ist.

3. Baustoffmischung nach Anspruch 1, **dadurch gekennzeichnet, dass** der Kesselsand eine Korngröße von ≤ 5 mm besitzt.

4. Baustoffmischung nach Anspruch 1, **dadurch gekennzeichnet, dass** die Kunststoffschaumstoffteilchen eine Teilchengröße von < 20 mm aufweisen.

5. Baustoffmischung nach Anspruch 1 oder 4, **dadurch gekennzeichnet, dass** die Kunststoffschaumstoffteilchen Polystyrolteilchen sind.

6. Baustoffmischung nach Anspruch 1, **dadurch gekennzeichnet, dass** die Mischung als weiteres Additiv ein Fließmittel enthält.

7. Verfahren zur Herstellung der Baustoffmischung nach einem der vorstehenden Ansprüche, **dadurch gekennzeichnet, dass** die Kunststoffschaumstoffteilchen in einen Fahrmischer gegeben werden und der Zement, der Sand, das Wasser und der Schaumbildner in einem Zwangsmischer gemischt werden, die im Zwangsmischer hergestellte Mischung aus Zement, Sand, Wasser und Schaumbildner zu den Kunststoffschaumstoffteilchen in dem Fahrmischer gegeben und im Fahrmischer mit den Kunststoffschaumstoffteilchen vermischt wird.

8. Verwendung der Baustoffmischung nach einem der Ansprüche 1 bis 6 als Ausgleichsschüttung unter Estrich oder sonstigen Lastverteilerplatten oder als Drainschicht oder im Garten- oder Landschaftsbau.

9. Verwendung nach Anspruch 8, **dadurch gekennzeichnet, dass** die Ausgleichsschicht in einem Fehlboden verwendet wird.

## Claims

1. A building material mixture comprising a mixture containing cement, sand, water, plastic foam particles and at least one additive,
**characterized in that**
the mixture contains a foaming agent as the additive, the sand is formed by boiler sand, and the following weight and volume proportions are present:
180 - 220 kg of cement,
110 - 150 kg of boiler sand,
80 - 100 kg of water, and
1000 ltr. of plastic foam particles.

2. A building material mixture according to claim 1, **characterized in that** the cement is a cement with the DIN standard I 42,5 R.

3. A building material mixture according to claim 1, **characterized in that** the boiler sand has a grain size of ≤ 5 mm.

4. A building material mixture according to claim 1, **characterized in that** the plastic foam particles have a particle size of ≤ 20 mm.

5. A building material mixture according to claim 1 or 4, **characterized in that** the plastic foam particles are polystyrene particles.

6. A building material mixture according to claim 1, **characterized in that** the mixture contains a superplasticizer as a further additive.

7. A method for producing the building material mixture according to any of the above claims, **characterized in that** the plastic foam particles are fed into a transit mixer and the cement, sand, water and foaming agent are mixed in a forced action mixer, the mixture of cement, sand, water and foaming agent produced in the forced action mixer is added to the plastic foam particles in the transit mixer and mixed with the plastic foam particles in the transit mixer.

8. Use of the building material mixture according to any of claims 1 to 6 as leveling fill under screed or other load distribution plates or as a drain layer or in horticulture or landscaping.

9. Use according to claim 8, **characterized in that** the leveling layer is used in a dead floor.

## Revendications

1. Mélange de matériau de construction constitué par
un mélange contenant du ciment, du sable, de l'eau, des particules de mousse en matière plastique et au moins un additif,
**caractérisé en ce que**
le mélange contient en tant qu'additif un agent moussant, le sable est formé par du mâchefer, et l'on est en présence des parts de poids et de volume suivantes :
180 à 220 kg de ciment,
110 à 150 kg de mâchefer,
80 à 100 kg d'eau et
10001 l de particules de mousse en matière plastique.

2. Mélange de matériau de construction selon la revendication 1, **caractérisé en ce que** le ciment est un ciment de la norme DIM 42,5 R.

3. Mélange de matériau de construction selon la revendication 1, **caractérisé en ce que** le mâchefer possède une grosseur de grain de ≤ 5 mm.

4. Mélange de matériau de construction selon la revendication 1, **caractérisé en ce que** les particules de mousse en matière plastique présentent une dimension de particule de ≤ 20 mm

5. Mélange de matériau de construction selon l'une ou l'autre des revendications 1 et 4, **caractérisé en ce que** les particules de mousse en matière plastique sont des particules de polystyrène.

6. Mélange de matériau de construction selon la revendication 1, **caractérisé en ce que** le mélange contient un agent de fluxage à titre d'additif additionnel.

7. Procédé de fabrication du mélange de matériau de construction selon l'une des revendications précédentes, **caractérisé en ce qu'**on introduit les particules de mousse en matière plastique dans un malaxeur mobile, et on mélange le ciment, le sable, l'eau et l'agent moussant dans un malaxeur à mélange forcé, on ajoute le mélange réalisé dans le malaxeur forcé à partir de ciment, de sable, d'eau et d'agent moussant aux particules de mousse en matière plastique dans le malaxeur mobile et on les mélange aux particules de mousse en matière plastique dans le malaxeur mobile.

8. Utilisation du mélange de matériau de construction selon l'une des revendications 1 à 6 en tant que masse de compensation au-dessous d'une chape ou d'autres plaques de répartition des charges ou en tant que couche de drainage ou pour des travaux d'horticulture ou de paysagisme.

9. Utilisation selon la revendication 8, **caractérisé en ce que** la couche de compensation est utilisée dans un plancher perdu.
